# EUROPEAN PATENT SPECIFICATION

(11) **EP 0 326 223 B1**
(45) Date of publication and mention of the grant of the patent: **08.05.1996**
(21) Application number: 89200148.8
(22) Date of filing: 24.01.1989
(51) Int. Cl.: C08K 5/00, C08K 5/13, C08L 73/00

(54) **Copolymer composition**
Zusammensetzung von Copolymeren
Composition de copolymére

(30) Priority: 29.01.1988 GB 8801995; 29.02.1988 GB 8804726; 10.02.1988 GB 8803035
(43) Date of publication of application: 02.08.1989
(73) Proprietor: SHELL INTERNATIONALE RESEARCH MAATSCHAPPIJ B.V., NL-2596 HR Den Haag (NL)
(72) Inventor: Syrier, Johannes Leopold Marie, NL-1031 CM Amsterdam (NL); van de Weg, Hendrik, NL-1031 CM Amsterdam (NL)

(56) References cited:
- EP-A- 0 181 014
- EP-A- 0 213 671
- EP-A- 0 288 124
- EP-A- 0 289 077
- US-A- 3 968 082
- US-A- 4 024 104
- "Ullmanns Encyklopädie der technischen Chemie", 4. Aufl., 1978, Band 15, pages 257-260

## Description

The present invention relates to copolymer compositions comprising certain additives. The relevant copolymers are characterized by having an alternating structure [A-CO]ₙ in which A is a unit derived from an olefinically unsaturated compound. The term "copolymer" includes terpolymers in which different units A are present. As an example of suitable terpolymers reference is made to a copolymer of ethene, carbon monoxide and propene or butene.

The relevant alternating copolymers and their methods of preparation are known per se, cf US-A 3 694 412, EP-A 121 965 and EP-A 181 014. Whilst these copolymers have attractive physical and mechanical properties such as yield stress, tensile strength, impact strength and flexural modulus, their processing stability and long-life or end-use stability leave room for improvement.

US-A-4024104 discloses ethylene-carbon monoxide copolymer compositions which are stabilized against thermal degradation by the addition of 2-(2' hydroxyphenyl)-benzotriazols.

Applicants have found that a very large number of commercial thermostabilizers that perform well in polyamides, polyolefins, polyacrylates, polystyrenes and various other commodity thermoplastics and engineering thermoplastics fail to achieve adequate thermostabilization of alternating ethylene/carbon monoxide copolymers. It is therefore surprising to find that a few small groups of narrowly defined additives have been found that do produce the desired thermostabilizing improvement. It is even more surprising to find that a prime thermostabilizer for polyolefins, the n-octadecyl ester of 3-(3,5-di-t.butyl-4-hydroxyphenyl)propionic acid, when used alone, fails to achieve an acceptable thermostabilization, whereas the same compound in combination with other, selected, thermostabilizers produces the desired stabilizing effect.

The present invention provides stabilized copolymer compositions comprising an alternating copolymer of carbon monoxide and an olefinically unsaturated compound and, based on the weight of the copolymer, from 0.03 to 3.0 %w of a sterically hindered phenolic compound selected from
1) bis- and tris-phenolic alkanes,
2) tris-phenolic (alkyl)benzenes,
3) tris-phenolic cyanurates,
4) symmetrical diesters of hydroxyphenyl substituted
aliphatic monocarboxylic acids and N,N'-bis(hydroxyalkyl)oxalamide, or
5) a blend comprising
on the one hand:
(5a) an alkyl ester of a monovalent carboxylic acid carrying a terminal sterically hindered phenol substituent, the alkyl moiety of the ester derived from the alcohol having from 8 to 30 carbon atoms, and/or
(5b) a diester as defined above under 4), and/or
(5c) a symmetrical diester of a hydroxy phenyl substituted aliphatic monocarboxylic acid and a di-, tri- or tetraoxyalkylene glycol, and/or
(5d) a symmetric hydroxyphenyl substituted N,N'-dialkanoyl-hydrazide; and
on the other hand:
(5e) an aromatic amine, and/or
(5f) a compound having the general formula

   R¹OOC- (CH₂)ₚ-S-(CH₂)_{q}-COOR

   in which p and q are integers from 1 to 6, and R¹ and R are hydrocarbyl groups with 6 to 24 carbon atoms.

Preferred compounds of group (1) stabilizers are substituted methanes, ethanes and propanes including 1,1 and 1,2-substituted ethanes, 1,1,1-; 1,1,2-; 1,1,3- and 1,2,3-substituted propanes. Preferred substituents are hydroxyphenyl and hydroxybenzyl substituents in which the aromatic nucleus carries at least one, preferably two sterically hindering alkyl groups, e.g. isopropyl, isobutyl, isoamyl, t.butyl and t.amyl, and as further substituents one or more alkyl groups with 1 to 6 carbon atoms, suitably methyl or ethyl. Eligible compounds within this group are those enumerated in the working example included herein. The latter are most preferred. Other eligible representatives are:
1,1-bis-(2-hydroxy,3-t.butyl,5-ethylphenyl)-ethane 1,2-bis-(2-hydroxy,3-t.butyl,5-ethylphenyl)-ethane 1,2-bis-(2-hydroxy,3-t.butyl,5-methylphenyl)-propane 1,1-bis-(2-hydroxy,3-t.butyl,6-methylphenyl)-propane 1,1,2-tris-(2-hydroxy,3-t.butyl,4-methylphenyl)-propane bis-(2-hydroxy,3-t.butyl,5-n-butylphenyl)-methane. bis-(4-hydroxy-3-t.butyl,5-methylphenyl)-methane 1,2,3-tris-(2-hydroxy,3-t.butylphenyl)-propane 1,2-bis-(2-hydroxy,3-t.butylphenyl)-ethane 1,2-bis-(4-hydroxy-3,5-di-t.butylphenyl)ethane 1,2,3-tris-(4-hydroxy-3,5-di-t.butylphenyl)propane bis-(4-hydroxy-3-t.amylphenyl)methane.

Preferred compounds of group (2) are tris-(3-t.butyl-4-hydroxyphenyl)benzenes and tris-(3,5-di-t.butyl-4-hydroxyphenyl)benzenes, and tris-(3-t.butyl-4-hydroxybenzyl)benzenes and tris-(3,5-di-t.butyl-4-hydroxybenzyl)benzenes. The phenyl or benzyl groups are preferably attached to the central benzene nucleus in the 1,3,5-position, whilst the remaining positions of the central benzene nucleus may carry alkyl group substituents with 1 to 6 carbon atoms, preferably methyl or ethyl groups. A 2,4,6-mesitylene central aromatic nucleus is particularly preferred. In stead of the t.butyl group other sterically hindering groups, e.g. isopropyl, isoamyl, isobutyl or t.amyl may also be employed. The most preferred compound is 1,3,5-tris-(3,5-di-t.butyl-4-hydroxybenzyl)-2,4,6-trimethylbenzene.

Preferred compounds of group (3) are tris-(2, or 4-hydroxyphenyl)cyanurates and tris-(2- or 4-hydroxybenzyl)cyanurates which comprise one or two sterically hindering alkyl groups relative to the hydroxyl groups. Thus, suitable phenyl or benzyl substituents to the central cyanurate nucleus are selected from 3,5-di-t.butyl--4-hydroxy; 3,5-di-t.amyl-4-hydroxy-; 3-t.butyl-2-hydroxy-; 3-isopropyl-2-hydroxy-; 3-isoamyl-5-methyl-4-hydroxy-; 3-t.butyl-4--hydroxy-5-n-propyl-phenyl and -benzyl groups.

Most preferred is tris-(4-hydroxy-3,5-di-t.butylbenzyl)cyanurate.

Preferred compounds of group (4) are di-esters of N,N′-bis(hydroxy-n-alkyl)oxalamide, in which the alkyl group has 1 to 6 carbon atoms, and of monovalent carboxylic acids with 2 to 6 carbon atoms which carry a 2- or 4-hydroxyphenyl substituent in their terminal positions. In at least one of the ortho positions in respect of the phenolic hydroxyl group a sterically hindering alkyl group should be present, preferably there are two of such hindering groups. The most preferred members of this group (4) are symmetrical esters of N,N′-bis(2-hydroxyethyl)oxalamide and of 3-(4-hydroxy-3,5-di-t.alkylphenyl)-propionic acid. The best compound is the one referred to in Example 1 given herein.

Preferred copolymers are those having a weight molecular weight of at least 2000, better still, at least 6000. Other groups of preferred copolymers comprise CO/ethene copolymers and ethene/CO/propene terpolymers.

Preferred sterically hindered phenol thermostabilizers of group (5a) are those esters in which the alkyl moiety is derived from an aliphatic alcohol with from 8 to 30, preferably from 15 to 21 carbon atoms, e.g. palmityl, stearyl, octadecyl or eicosylalcohol. As sterically hindering phenol 4-hydroxy-3,5-di-sec.or t.alkyl-phenyl groups are preferred, the t.butyl group being the most preferred hindering alkyl substituent. The acid moiety in the ester is preferably relatively short chain, e.g. acetic acid, butyric acid, pentanoic or hexanoic acid with propionic acid being most preferred. The most effective compound is the one referred to in Example 2 herein.

Likewise, the sterically hindered phenol substituent in each of the thermostabilizers selected from groups (5b) and (5d) is preferably chosen from 4-hydroxy-3,5-di-sec. or t.alkylphenyls with t.butyl groups in the 3- or 5-position being most preferred.

The preferred alcohol moiety in group (5b) stabilizers comprises as hydroxyalkylgroup a hydroxy C₂-C₆-alkyl group with hydroxyethylene being most preferred. Preferred acid moieties are those selected from hydroxy phenyl substituted aliphatic acids with 2 to 8 carbon atoms, (excluding the hydroxy phenyl substituent), with substituted propionic acid being most preferred. The best thermostabilizer of group (5b) is the one referred to in Example 2.

In group (5c) stabilizers the preferred phenol substituents are chosen from both 4-hydroxy-3-alkyl-5-sec. or t.alkylphenyls and 4-hydroxy-3,5-di-sec. or t.alkylphenyls, the preferred alcohol moiety is preferably selected from those oxyalkylene glycols in which each alkylene group has from 2 to 6 carbon atoms with triethylene glycol being most preferred. Preferred acid moieties are those selected from hydroxy phenyl substituted aliphatic acids with 2 to 8 carbon atoms, (excluding the hydroxy phenyl substituent), with substituted propionic acid being most preferred. The prime thermostabilizer of group (5c) is the one elucidated in Example 2.

In the substituted hydrazides of group (5d) compounds the hydroxyphenyl alkanoyl groups are preferably selected from hydroxy phenyl C₂-C₈ alkanoyl groups with the propanoyl being most preferred. Once again the best thermostabilizer of group (5d) is the one illustrated in Example 2.

Preferred aromatic amines (5e) are selected from diphenylamines, such as 4,4′-bisbenzyl-diphenylamines or anilino-diphenylamines, or from diaminonaphthalenes, preferably 1,8-diaminonaphthalene and N,N,N′,N′-tetralkyl-1,8-diamino-naphthalenes in which each of the four alkyl substituents has 1 to 6 carbon atoms.

In diphenylamines the phenyl groups and further benzyl groups, if present, may carry one or more alkyl substituents. Preferred representatives of bisbenzyl-diphenylamines and anilino-diphenylamines are 4-anilino-diphenylamine, 3-anilino-diphenylamine, 2-anilino-diphenylamine, 4-anilino-2-methyl-2′-ethyl-diphenylamine, 4-(4-ethylanilino)-2-n-propyl-3′-methyl-diphenylamine, 4,4′-bis-(alphamethylbenzyl)-diphenylamine, 4,4′-bis-(alphamethyl, alpha-2-butylbenzyl)-2-ethyl-3′-methyl-diphenylamine, N-octyl-diphenylamine, N-propyl diphenylamine and N-methyl-2-methyl-4′-butyl-diphenylamine. The most preferred members of this group are those set out in Example 2 herein.

Likewise it is included within the scope of this invention to employ various alkyl-substituted 1,8-diaminonaphthalenes, such as N,N′-dimethyl-1,8-diaminonaphthalene; 3-methyl-7-isopropyl-1,8-diaminonaphthalene; N,N′-diethyl-1,8-diaminonaphthalene; N,N-dimethyl-N′-isopropyl-1,8-diaminonaphthalene and N,N,N′-trimethyl-1,8-diaminonaphthalene.

Other eligible aromatic amine stabilizers can be selected from compounds such as aniline, 4-methoxyaniline, 4-aminophenol, 4-methoxy-2-methylaniline, 3-amino-o-cresol, 4-amino-m-cresol, 4-amino-2,5-dimethylphenol, 3-N,N′-diethylaminophenol, 4-pentyloxyaniline, 2,5-dimethoxyaniline, N-ethyl-4-ethoxyaniline, N,N′-dimethylaniline, 2-aminonaphthalene, 1-hydroxy-4-amino-naphthalene, 1-methylamino-5-hydroxynaphthalene, 3-propoxy-2-aminonaphthalene, 1,5-diaminonaphthalene, 2-dimethylamino-7-diethylaminonaphthalene, 1-amino-4-methyl-8-methoxynaphthalene, N,N′-diphenylbenzidine, N,N,N′,N′-tetramethylbenzidine, 2,2′-dimethylbenzidine and 4-amino-4′-methoxybiphenyl.

As optional costabilizer the compositions containing blends of group 5 may in addition comprise from 0.2 to 1.0 %w of an additive (5g) selected from sterically hindered pyridines, preferably di-sec. or -t.alkyl pyridines. The best representative of such costabilizers is 3,5-di-t.butylpyridine.

In the blend compounds of group (5f), preference is given to those compounds in which both p and q are 2, and/or in which both R¹ and R are alkyl groups with 12 carbon atoms.

The relative weight proportions of the components of the blends according to group (5), are suitably approximately equal, but may vary between 4:1 and 1:4.

Preferred copolymers are those having a weight molecular weight of at least 2000, better still, at least 6000. Other groups of preferred copolymers comprise CO/ethene copolymers and ethene/CO/propene terpolymers.

Preferred amounts of additives are from 0.05 to 1.5 %w. When the composition of the invention comprises a blend, according to group 5, the preferred amount are also in this range. Thus a suitable composition would comprise from 0.05 to 1.5 %w of a blend compound as defined in groups (5a), (5b), (5c) and (5d), and from 0.05 to 1.5 %w of an aromatic amine. Another suitable composition would comprise from 0.05 to 1.0 %w of a blend compound as defined in group (5a), and from 0.1 to 2.0 %w of a compound as defined in group (5f).

The improved compositions of this invention can be processed into articles of manufacture such as fibres, sheets, films, laminates, bottles, tubes, piping and articles having an intricate shape by conventional processing techniques such as melt-spinning, extrusion, coextrusion, blow-moulding, compression-moulding, injection-moulding and solid phase pressure forming. The invention is of special importance to melt-spinning, extrusion and coextrusion applications. In addition, it is of special importance to all those applications where adequate long-life stability of finished articles of manufacture is essential.

### EXAMPLE 1

The following compounds were tested for determining their thermostabilizing performance:
(1) bis-(2-hydroxy-3-t.butyl-5-methylphenyl)-methane
(2) bis-(4-hydroxy-3,5-di-t.butylphenyl)-methane
(3) 1,1,2-tris-(4-hydroxy-3-t.butyl-6-methylphenyl)-propane
(4) tris-(4-hydroxy-3,5-di-t.butylbenzyl)cyanurate
(5) 1,3,5-tris-(4-hydroxy-3,5-di-t.butylbenzyl)-,2,4,-6-trimethylbenzene
(6) diester of N,N′-bis-(2-hydroxyethyl)oxalamide and 3-(4-hydroxy-3,5-di-t.butylphenyl)-propionic acid
(7)* n-octadecyl ester of 3-(4-hydroxy-3,5-di-t.butylphenyl)-propionic acid
(8)* tetra ester of pentaerythritol and 3-(4-hydroxy-3,5-di-t.butylphenyl)-propionic acid.

Compounds marked * were used for comparative purposes.

1 mm thick test specimens having a length of 30 mm and a width of 3 mm were prepared by compression-moulding at 250 °C from an ethene/propene/carbon monoxide terpolymer having a linear alternating structure, a crystalline melting point of 231 °C and an intrinsic viscosity of 2.3 dl/g.

The test specimens were subjected to aerobic oven aging tests at various temperatures, marked in Table 1 below. All specimens were bent by hand at an angle of 180° and the appearance of cracks was recorded as brittleness (failure). Time of heating in the oven to reach the moment of failure was determined.

All thermostabilizers were employed in an amount of 0.3 %w, based on the weight of the terpolymer.

**TABLE 1**

| Additive | Time to failure (hrs) | |
|---|---|---|
| | Heating at | |
| | 135 °C | 115 °C |
| 1 | 137 | 760 |
| 2 | 87 | --- |
| 3 | 97 | 365 |
| 4 | 65 | --- |
| 5 | 65 | 335 |
| 6 | 137 | 500 |
| 7* | 30 | 161 |
| 8* | 28 | 142 |

| | | |
|---|---|---|
| * for comparison | | |

The table shows that additives 7 and 8 which are commercial top quality single thermostabilizers for polyethenes, polypropenes and polyamides completely fail to show an attractive performance.

### EXAMPLE 2

The following compounds were tested for their thermostabilizing performance:
(1) n-octadecylester of 3-(3,5-di-t.butyl-4-hydroxyphenyl)-propionic acid,
(2) 4,4′-bis(alpha,alphadimethylbenzyl)-diphenylamine,
(3) 4-anilino-diphenylamine,
(4) N,N,N′,N′,-tetramethyl-1,8-diaminonaphthalene,
(5) 2,6-di-t.butylpyridine,
(6) diester of 3-(4-hydroxy-3,5-di-t.butylphenyl)propionic acid and N,N′-bis-(2-hydroxyethyl)oxalamide,
(7) diester of 3-(4-hydroxy-3-methyl-5-t.butylphenyl)propionic acid and trioxyethyleneglycol,
(8) N,N′-bis-[3-(4-hydroxy-3,5-di-t.butylphenyl)propanoyl]-hydrazine,
(9) dilauryl thiodipropionate.

1 mm thick test specimens having a length of 30 mm and a width of 3 mm were prepared by compression-moulding at 250 °C from an ethene/propene/carbon monoxide terpolymer having an alternating structure, a crystalline melting point of 218 °C and an intrinsic viscosity of 1.82 dl/g, determined in m-cresol at 60 °C.

The test specimens were tested as in Example 1, and the results are given in Table 2.

**TABLE 2**

| Additive | Time to failure (hrs) | | |
|---|---|---|---|
| | Heating at | | |
| | 135 °C | 115 °C | 105 °C |
| 0.3 (1)* | 17 | 90 | 210 |
| 0.3 (1) + 0.3 (2) | 70 | 290 | |
| 0.3 (1) + 0.3 (3) | 40 | 145 | |
| 0.3 (1) + 0.3 (4) | 30 | 170 | |
| 0.3 (1) + 0.3 (4) + 0.3 (5) | 30 | 115 | |
| 0.3 (6) | 73 | 284 | |
| 0.3 (6) + 0.3 (2) | 80 | 360 | |
| 0.3 (7)* | 65 | 280 | |
| 0.3 (7) + 0.3 (2) | 80 | 340 | |
| 0.3 (8)* | 65 | 280 | |
| 0.3 (8) + 0.3 (2) | 70 | 400 | |
| 0.3 (1) + 0.6 (9) | 50 | 160 | >210 |
| None * | 6 | 24 | 50 |

| | | | |
|---|---|---|---|
| * for comparison | | | |

The table shows that additive (1) which is a commercial top quality single thermostabilizer for polyethene, polypropene and polyamides, fails to show an attractive performance. Since the polymer degradation mechanism of the relevant ethylene/carbon monoxide copolymers used in this invention and the physico-chemical behaviour of the additives in the copolymers are not known there is no way of predicting the favourable results obtained with the additives used in this invention.

Results at best similar to, but mostly inferior to those reported for the comparative additives in the Tables hereinabove were obtained when testing many other commercial thermostabilizers for thermoplastics.

## Claims (Claims for the following Contracting State(s): AT, BE, CH, LI, DE, FR, GB, GR, IT, NL, SE)

1. Stabilized copolymer compositions characterized by comprising an alternating copolymer of carbon monoxide and an olefinically unsaturated compound and from 0.03 to 3.0 %w of a sterically hindered phenolic compound selected from
1) bis- and tris-phenolic alkanes,
2) tris-phenolic (alkyl)benzenes,
3) tris-phenolic cyanurates,
4) symmetrical diesters of hydroxyphenyl substituted aliphatic monocarboxylic acids and N,N'-bis(hydroxyalkyl)oxalamide, or
5) a blend comprising
on the one hand:
(5a) an alkyl ester of a monovalent carboxylic acid carrying a terminal sterically hindered phenol substituent, the alkyl moiety of the ester derived from the alcohol having from 8 to 30 carbon atoms, and/or
(5b) a diester as defined above under 4), and/or
(5c) a symmetrical diester of a hydroxy phenyl substituted aliphatic monocarboxylic acid and a di-, tri- or tetraoxyalkylene glycol, and/or
(5d) a symmetric hydroxyphenyl substituted N,N'-dialkanoyl-hydrazide; and
on the other hand:
(5e) an aromatic amine, and/or
(5f) a compound having the general formula
R¹OOC-(CH₂)ₚ-S-(CH₂)_{q}-COOR
in which p and q are integers from 1 to 6, and R¹ and R are hydrocarbyl groups with 6 to 24 carbon atoms.

2. A composition as claimed in claim 1 in which the phenolic compound of group (1) is bis-(2-hydroxy-3-t.butyl-5-methylphenyl)-methane.

3. A composition as claimed in claim 1 in which the phenolic compound of group (1) is bis-(4-hydroxy-3,5-di-t.butylphenyl)-methane.

4. A composition as claimed in claim 1 in which the phenolic compound of group (1) is 1,1,2-tris-(4-hydroxy-3-t.butyl-6-methylphenyl)-propane.

5. A composition as claimed in claim 1 in which the phenolic compound of group (3) is tris-(4-hydroxy-3,5-di-t.butylbenzyl)cyanurate.

6. A composition as claimed in claim 1 in which the phenolic compound of group (2) is 1,3,5-tris-(4-hydroxy-3,5-di-t.butylbenzyl)-2,4,6-trimethylbenzene.

7. A composition as claimed in claim 1 in which the phenolic compound of group (4) is the diester of N,N'-bis-(2-hydroxyethyl)oxalamide and 3-(4-hydroxy-3,5-di-t.butylphenyl)-propionic acid.

8. A composition as claimed in claim 1 in which the phenolic blend compound (5a) is an ester of a 3-(3,5-di-sec. or tert.alkyl-4-hydroxyphenyl)propionic acid and a monohydric aliphatic alcohol with from 15 to 21 carbon atoms.

9. A composition as claimed in claim 1 in which the phenolic blend compound (5b) is a diester of 3-(3,5-di-sec.or t.alkyl-4-hydroxyphenyl) propionic acid and a N,N'-dihydroxy alkyloxalamide in which the latter alkyl group has from 2 to 6 carbon atoms.

10. A composition as claimed in claim 1 in which the phenolic blend compound (5c) is a diester of 3-(3-alkyl,5-sec. or t.alkyl-4-hydroxyphenyl) propionic acid and a trioxyalkylene glycol, the alkylene groups having from 2 to 6 carbon atoms.

11. A composition as claimed in claim 1 in which the phenolic blend compound (5d) is an N,N'-di[3-(3,5-di-sec. or t.alkyl-4-hydroxyphenyl)propanoyl]hydrazine.

12. A composition as claimed in any of claims 1 to 11, in which the blend compound (5e) is a diphenyl amine.

13. A composition as claimed in claim 12 in which the diphenyl amine is a 4,4'-bis(benzyl)-diphenylamine, in which the benzyl and phenyl groups may carry one or more alkyl group substituents.

14. A composition as claimed in claim 12 in which the diphenyl amine is an anilino-diphenylamine.

15. A composition as claimed in any of claims 1 to 11 in which the blend compound (5e) is a 1,8-diaminonaphthalene in which one or both of the nitrogen atoms may carry one or two alkyl group substituents.

16. A composition as claimed in any of claims 1 to 15 in which the blend (5) in addition comprises from 0.2 to 1.0 %w of a further additive (5g) being a sterically hindered pyridine.

17. A composition as claimed in any of claims 1 to 16 in which p and q are 2 in the blend compound (5f).

18. A composition as claimed in any of claims 1 to 17 in which R¹ and R are alkyl groups with 12 carbon atoms in the blend compound (5f).

19. A composition as claimed in any of claims 1 to 18, in which the copolymer is an ethene/CO copolymer.

20. A composition as claimed in any of claims 1 to 18, in which the copolymer is an ethene/CO/propene terpolymer.

21. A composition as claimed in claim 1, which comprises from 0.05 to 1.5 %w of a blend compound selected from compounds (5a), (5b), (5c) and (5d) and from 0.05 to 1.5 %w of an aromatic amine.

22. A composition as claimed in claim 1, which comprises from 0.05 to 1.0 %w of blend compound (5a), and from 0.1 to 2.0 %w of a compound as defined in group (5f).

## Claims (Claims for the following Contracting State(s): ES)

1. Process comprising adding from 0.03 to 3.0 %w of a sterically hindered phenolic compound to an alternating copolymer of carbon monoxide and an olefinically unsaturated compound, in which the sterically hindered phenolic compound is selected from
1) bis- and tris-phenolic alkanes,
2) tris-phenolic (alkyl)benzenes,
3) tris-phenolic cyanurates,
4) symmetrical diesters of hydroxyphenyl substituted aliphatic monocarboxylic acids and N,N'-bis(hydroxyalkyl)oxalamide, or
(5) a blend comprising
on the one hand:
(5a) an alkyl ester of a monovalent carboxylic acid carrying a terminal sterically hindered phenol substituent, the alkyl moiety of the ester derived from the alcohol having from 8 to 30 carbon atoms, and/or
(5b) a diester as defined above under 4), and/or
(5c) a symmetrical diester of a hydroxy phenyl substituted aliphatic monocarboxylic acid and a di-, tri- or tetraoxyalkylene glycol, and/or
(5d) a symmetric hydroxyphenyl substituted N,N'-dialkanoylhydrazide; and
on the other hand:
(5e) an aromatic amine, and/or
(5f) a compound having the general formula
R¹OOC-(CH₂)ₚ-S-(CH₂) _{q}-COOR
in which p and q are integers from 1 to 6, and R¹ and R are hydrocarbyl groups with 6 to 24 carbon atoms.

2. Process as claimed in claim 1 in which the phenolic compound of group (1) is bis-(2-hydroxy-3-t.butyl-5-methylphenyl)-methane.

3. Process as claimed in claim 1 in which the phenolic compound of group (1) is bis-(4-hydroxy-3,5-di-t.butylphenyl)-methane.

4. Process as claimed in claim 1 in which the phenolic compound of group (1) is 1,1,2-tris-(4-hydroxy-3-t.butyl-6-methylphenyl)-propane.

5. Process as claimed in claim 1 in which the phenolic compound of group (3) is tris-(4-hydroxy-3,5-di-t.butylbenzyl)cyanurate.

6. Process as claimed in claim 1 in which the phenolic compound of group (2) is 1,3,5-tris-(4-hydroxy-3,5-di-t.butylbenzyl)-2,4,6-trimethylbenzene.

7. Process as claimed in claim 1 in which the phenolic compound of group (4) is the diester of N,N'-bis-(2-hydroxyethyl)oxalamide and 3-(4-hydroxy-3,5-di-t.butylphenyl)-propionic acid.

8. Process as claimed in claim 1 in which the phenolic blend compound (5a) is an ester of a 3-(3,5-di-sec. or tert.alkyl-4-hydroxyphenyl)propionic acid and a monohydric aliphatic alcohol with from 15 to 21 carbon atoms.

9. Process as claimed in claim 1 in which the phenolic blend compound (5b) is a diester of 3-(3,5-di-sec.or t.alkyl-4-hydroxyphenyl) propionic acid and a N,N'-dihydroxy alkyloxalamide in which the latter alkyl group has from 2 to 6 carbon atoms.

10. Process as claimed in claim 1 in which the phenolic blend compound (5c) is a diester of 3-(3-alkyl,5-sec. or t.alkyl-4-hydroxyphenyl) propionic acid and a trioxyalkylene glycol, the alkylene groups having from 2 to 6 carbon atoms.

11. Process as claimed in claim 1 in which the phenolic blend compound (5d) is an N,N'-di[3-(3,5-di-sec. or t.alkyl-4-hydroxyphenyl)propanoyl]hydrazine.

12. Process as claimed in any of claims 1 to 11, in which the blend compound (5e) is a diphenyl amine.

13. Process as claimed in claim 12 in which the diphenyl amine is a 4,4'-bis(benzyl)-diphenylamine, in which the benzyl and phenyl groups may carry one or more alkyl group substituents.

14. Process as claimed in claim 12 in which the diphenyl amine is an anilino-diphenylamine.

15. Process as claimed in any of claims 1 to 11 in which the blend compound (5e) is a 1,8-diaminonaphthalene in which one or both of the nitrogen atoms may carry one or two alkyl group substituents.

16. Process as claimed in any of claims 1 to 15 in which the blend (5) in addition comprises from 0.2 to 1.0 %w of a further additive (5g) being a sterically hindered pyridine.

17. Process as claimed in any of claims 1 to 16 in which p and q are 2 in the blend compound (5f).

18. Process as claimed in any of claims 1 to 17 in which R¹ and R are alkyl groups with 12 carbon atoms in the blend compound (5f).

19. Process as claimed in any of claims 1 to 18, in which the copolymer is an ethene/CO copolymer.

20. Process as claimed in any of claims 1 to 18, in which the copolymer is an ethene/CO/propene terpolymer.

21. Process as claimed in claim 1, which comprises from 0.05 to 1.5 %w of a blend compound selected from compounds (5a), (5b), (5c) and (5d) and from 0.05 to 1.5 %w of an aromatic amine.

22. Process as claimed in claim 1, which comprises from 0.05 to 1.0 %w of blend compound (5a), and from 0.1 to 2.0 %w of a compound as defined in group (5f).

## Patentansprüche (Patentansprüche für folgende(n) Vertragsstaat(en): AT, BE, CH, LI, DE, FR, GB, GR, IT, NL, SE)

1. Stabilisierte Copolymerzusammensetzungen, dadurch gekennzeichnet, daß sie ein alternierendes Copolymer aus Kohlenmonoxid und einer olefinisch ungesättigten Verbindung sowie 0,03 bis 3,0 Gew.-% einer sterisch gehinderten Phenolverbindung umfassen, ausgewählt aus
(1) bis- und tris-phenolischen Alkanen
(2) tris-phenolischen (Alkyl)benzolen
(3) tris-phenolischen Cyanuraten
(4) symmetrischen Diestern von Hydroxyphenyl-substituierten aliphatischen Monocarbonsäuren und N,N'-Bis(hydroxyalkyl)oxalamid, oder
(5) eines Gemisches, das einerseits:
(5a) einen Alkylester einer einwertigen Carbonsäure mit einem endständigen, sterisch gehinderten Phenolsubstituenten, wobei der Alkylteil des vom Alkohol abgeleiteten Esters 8 bis 30 Kohlenstoffatome aufweist, und/oder
(5b) einen Diester, wie vorstehend unter (4) definiert, und/oder
(5c) einen symmetrischen Diester einer Hydroxyphenyl-substituierten aliphatischen Monocarbonsäure mit einem Di-, Tri- oder Tetraoxyalkylenglykol, und/oder
(5d) ein symmetrisch Hydroxyphenyl-substituiertes N, N'-Dialkanoyl-hydrazid umfaßt; und anderseits:
(5e) ein aromatisches Amin und/oder
(5f) eine Verbindung mit der allgemeinen Formel
R¹OOC-(CH₂)ₚ-S-(CH₂)q-COOR
umfaßt, worin p und q ganze Zahlen von 1 bis 6 darstellen und R¹ und R Kohlenwasserstoffgruppen mit 6 bis 24 Kohlenstoffatomen bedeuten.

2. Zusammensetzung nach Anspruch 1, worin die phenolische Verbindung aus Gruppe (1) Bis-(2-hydroxy-3-t,butyl-5-methylphenyl)-methan ist.

3. Zusammensetzung nach Anspruch 1, worin die phenolische Verbindung aus Gruppe (1) Bis-(4-hydroxy-3,5-t.butylphenyl)-methan ist.

4. Zusammensetzung nach Anspruch 1, worin die phenolische Verbindung aus Gruppe (1) 1,1,2-Tris-(4-hydroxy-3-t.butyl-6-methylphenyl)-propan ist.

5. Zusammensetzung nach Anspruch 1, worin die phenolische Verbindung aus Gruppe (3) Tris- (4-hydroxy-3,5-di-t.butylbenzyl)-cyanurat ist.

6. Zusammensetzung nach Anspruch 1, worin die phenolische Verbindung aus Gruppe (2) 1,3,5-Tris-(4-hydroxy-3,5-di-t.butylbenzyl)-2,4,6-trimethylbenzol ist.

7. Zusammensetzung nach Anspruch 1, worin die phenolische Verbindung aus Gruppe (4) der Diester von N,N'-(2-hydroxyethyl)oxalamid und 3(4-Hydroxy-3,5-di-t.butylphenyl)-propionsäure ist.

8. Zusammensetzung nach Anspruch 1, worin die phenolische Gemischverbindung (5a) ein Ester einer 3-(3,5-Di-sec. oder tert.alkyl-4-hydroxyphenyl)propionsäure mit einem einwertigen aliphatischen Alkohol mit 15 bis 21 Kohlenstoffatomen ist.

9. Zusammensetzung nach Anspruch 1, worin die phenolische Gemischverbindung (5b) ein Diester aus 3-(3,5-Di-sec. oder t.alkyl-4-hydroxyphenyl) propionsäure und einem N,N'-Dihydroxyalkyloxalamid ist, worin die letztgenannte Alkylgruppe 2 bis 6 Kohlenstoffatome aufweist.

10. Zusammensetzung nach Anspruch 1, worin die phenolische Gemischverbindung (5c) ein Diester von 3-(3-alkyl,5-sec. oder tert.alkyl-4-hydroxyphenyl)propionsäure mit einem Trioxyalkylenglycol ist, wobei die Alkylengruppen 2 bis 6 Kohlenstoffatome aufweisen.

11. Zusammensetzung nach Anspruch 1, worin die phenolische Gemischverbindung (5d) ein N,N'-Di[3-(3,5-di-sec.oder tert.alkyl-4-hydroxyphenyl)propanoyl]hydrazin ist.

12. Zusammensetzung nach einem der Ansprüche 1 bis 11, worin die Gemischverbindung (5e) ein Diphenylamin ist.

13. Zusammensetzung nach Anspruch 12, worin das Diphenylamin ein 4,4'-Bis(benzyl)-diphenylamin ist, worin die Benzyl- und Phenylgruppen einen oder mehrere Alkylgruppen-Substituenten tragen können.

14. Zusammensetzung nach Anspruch 12, worin das Diphenylamin ein Anilino-diphenylamin ist.

15. Zusammensetzung nach einem der Ansprüche 1 bis 11, worin die Gemischverbindung (5e) ein 1,8-Diaminonaphthalin ist, worin ein oder beide Stickstoffatome einen oder zwei Alkylgruppen-Substituenten tragen können.

16. Zusammensetzung nach einem der Ansprüche 1 bis 15, worin das Gemisch (5) zusätzlich 0,2 bis 1,0 Gew.-% eines weiteren Additivs (5g) umfaßt, das ein sterisch gehindertes Pyridin ist.

17. Zusammensetzung nach einem der Ansprüche 1 bis 16, worin p und q in der Gemischverbindung (5f) den Wert 2 aufweisen.

18. Zusammensetzung nach einem der Ansprüche 1 bis 17, worin R¹ und R in der Gemischverbindung (5f) Alkylgruppen mit 12 Kohlenstoffatomen darstellen.

19. Zusammensetzung nach einem der Ansprüche 1 bis 18, worin das Copolymer ein Ethen/CO-Copolymer ist.

20. Zusammensetzung nach einem der Ansprüche 1 bis 18, worin das Copolymer ein Ethen/CO/Propen-Terpolymer ist.

21. Zusammensetzung nach Anspruch 1, die von 0,05 bis 1,5 Gew.-% einer unter den Verbindungen (5a), (5b), (5c) und (5d) ausgewählten Gemischverbindung und von 0,05 bis 1,5 Gew.-% eines aromatischen Amins umfaßt.

22. Zusammensetzung nach Anspruch 1, welche 0,05 bis 1,0 Gew.-% Gemischverbindung (5a) und 0,1 bis 2,0 Gew.-% einer Verbindung, wie in Gruppe (5f) definiert, umfaßt.

## Patentansprüche (Patentansprüche für folgende(n) Vertragsstaat(en): ES)

1. Verfahren umfassend das Zusetzen von 0,03 bis 3,0 Gew.-% einer sterisch gehinderten Phenolverbindung zu einem alternierenden Copolymer aus Kohlenmonoxid und einer olefinisch ungesättigten Verbindung, worin die sterisch gehinderte Phenolverbindung ausgewählt ist aus
(1) bis- und tris-phenolischen Alkanen
(2) tris-phenolischen (Alkyl)benzolen
(3) tris-phenolischen Cyanuraten
(4) symmetrischen Diestern von Hydroxyphenyl-substituierten aliphatischen Monocarbonsäuren und N,N'-Bis(hydroxyalkyl)-oxalamid, oder
(5) einem Gemisch, das einerseits:
(5a) einen Alkylester einer einwertigen Carbonsäure mit einem endständigen, sterisch gehinderten Phenolsubstituenten, wobei der Alkylteil des vom Alkohol abgeleiteten Esters 8 bis 30 Kohlenstoffatome aufweist, und/oder
(5b) einen Diester, wie vorstehend unter (4) definiert, und/oder
(5c) einen symmetrischen Diester einer Hydroxyphenyl-substituierten aliphatischen Monocarbonsäure mit einem Di-, Tri- oder Tetraoxyalkylenglykol, und/oder
(5d) ein symmetrisch Hydroxyphenyl-substituiertes N,N'-Dialkanoyl-hydrazid umfaßt; und anderseits:
(5e) ein aromatisches Amin und/oder
(5f) eine Verbindung mit der allgemeinen Formel
R¹OOC-(CH₂)ₚ-S-(CH₂)_{q}-COOR
umfaßt, worin p und q ganze Zahlen von 1 bis 6 darstellen und R¹ und R Kohlenwasserstoffgruppen mit 6 bis 24 Kohlenstoffatomen bedeuten.

2. Verfahren nach Anspruch 1, worin die phenolische Verbindung aus Gruppe (1) Bis- (2-hydroxy-3-t,butyl-5-methylphenyl)-methan ist.

3. Verfahren nach Anspruch 1, worin die phenolische Verbindung aus Gruppe (1) Bis-(4-hydroxy-3,5-t.butylphenyl)-methan ist.

4. Verfahren nach Anspruch 1, worin die phenolische Verbindung aus Gruppe (1) 1,1,2-Tris-(4-hydroxy-3-t.butyl-6-methylphenyl)-propan ist.

5. Verfahren nach Anspruch 1, worin die phenolische Verbindung aus Gruppe (3) Tris- (4-hydroxy-3,5-di-t,butylbenzyl)-cyanurat ist.

6. Verfahren nach Anspruch 1, worin die phenolische Verbindung aus Gruppe (2) 1,3,5-Tris-(4-hydroxy-3,5-di-t.butylbenzyl)-2,4,6-trimethylbenzol ist.

7. Verfahren nach Anspruch 1, worin die phenolische Verbindung aus Gruppe (4) der Diester von N,N'-(2-hydroxyethyl)oxalamid und 3(4-Hydroxy-3,5-di-t.butylphenyl)-propionsäure ist.

8. Verfahren nach Anspruch 1, worin die phenolische Gemischverbindung (5a) ein Ester einer 3-(3,5-Di-sec. oder tert.alkyl-4-hydroxyphenyl)propionsäure mit einem einwertigen aliphatischen Alkohol mit 15 bis 21 Kohlenstoffatomen ist.

9. Verfahren nach Anspruch 1, worin die phenolische Gemischverbindung (5b) ein Diester aus 3-(3,5-Di-sec. oder t.alkyl-4-hydroxyphenyl)propionsäure und einem N,N'-Dihydroxyalkyloxalamid ist, worin die letztgenannte Alkylgruppe 2 bis 6 Kohlenstoffatome aufweist.

10. Verfahren nach Anspruch 1, worin die phenolische Gemischverbindung (5c) ein Diester von 3-(3-alkyl,5-sec. oder tert.alkyl-4-hydroxyphenyl)propionsäure mit einem Trioxyalkylenglycol ist, wobei die Alkylengruppen 2 bis 6 Kohlenstoffatome aufweisen.

11. Verfahren nach Anspruch 1, worin die phenolische Gemischverbindung (5d) ein N,N'-Di[3-(3,5-di-sec.oder tert.alkyl-4-hydroxyphenyl)propanoyl]hydrazin ist.

12. Verfahren nach einem der Ansprüche 1 bis 11, worin die Gemischverbindung (5e) ein Diphenylamin ist.

13. Verfahren nach Anspruch 12, worin das Diphenylamin ein 4,4'-Bis(benzyl)-diphenylamin ist, worin die Benzyl- und Phenylgruppen einen oder mehrere Alkylgruppen-Substituenten tragen können.

14. Verfahren nach Anspruch 12, worin das Diphenylamin ein Anilino-diphenylamin ist.

15. Verfahren nach einem der Ansprüche 1 bis 11, worin die Gemischverbindung (5e) ein 1,8-Diaminonaphthalin ist, worin ein oder beide Stickstoffatome einen oder zwei Alkylgruppen-Substituenten tragen können.

16. Verfahren nach einem der Ansprüche 1 bis 15, worin das Gemisch (5) zusätzlich 0,2 bis 1,0 Gew.-% eines weiteren Additivs (5g) umfaßt, das ein sterisch gehindertes Pyridin ist.

17. Verfahren nach einem der Ansprüche 1 bis 16, worin p und q in der Gemischverbindung (5f) den Wert 2 aufweisen.

18. Verfahren nach einem der Ansprüche 1 bis 17, worin R¹ und R in der Gemischverbindung (5f) Alkylgruppen mit 12 Kohlenstoffatomen darstellen.

19. Verfahren nach einem der Ansprüche 1 bis 18, worin das Copolymer ein Ethen/CO-Copolymer ist.

20. Verfahren nach einem der Ansprüche 1 bis 18, worin das Copolymer ein Ethen/CO/Propen-Terpolymer ist.

21. Verfahren nach Anspruch 1, die von 0,05 bis 1,5 Gew.-% einer unter den Verbindungen (5a), (5b), (5c) und (5d) ausgewählten Gemischverbindung und von 0,05 bis 1,5 Gew.-% eines aromatischen Amins umfaßt.

22. Verfahren nach Anspruch 1, welche 0,05 bis 1,0 Gew.-% Gemischverbindung (5a) und 0,1 bis 2,0 Gew.-% einer Verbindung, wie in Gruppe (5f) definiert, umfaßt.

## Revendications (Revendications pour l'(les) Etat(s) contractant(s) suivant(s): AT, BE, CH, LI, DE, FR, GB, GR, IT, NL, SE)

1. Compositions de copolymères stabilisées, caractérisées en ce qu'elles comprennent un copolymère alternant du monoxyde de carbone et d'un composé à insaturation oléfinique et de 0,03 à 3,0% en poids d'un composé phénolique stériquement empêché, choisi parmi
1) les alcanes bis- et tris-phénoliques,
2) les (alkyl)benzènes tris-phénoliques,
3) les cyanurates tris-phénoliques,
4) les diesters symétriques d'acides monocarboxyliques aliphatiques à substitution hydroxyphénylique et du N,N'-bis(hydroxyalkyle)oxalamide, ou
5) un mélange comprenant,
d'une part,
(5a) un ester alkylique d'un acide carboxylique monovalent portant un substituant du type phénol stériquement empêché terminal, le groupement alkyle de l'ester étant dérivé d'un alcool possédant de 8 à 30 atomes de carbone, et/ou
(5b) un diester tel que défini ci-dessus sous 4), et/ou
(5c) un diester symétrique d'un acide monocarboxylique aliphatique à substitution hydroxyphénylique et d'un di-, tri- ou tétraoxyalkylèneglycol, et/ou
(5d) un N,N'-dialcanoylhydrazide à substitution hydroxyphénylique symétrique et,
d'autre part,
(5e) une amine aromatique, et/ou
(5f) un composé répondant à la formule générale :
R¹OOC-(CH₂)ₚ-S-(CH₂)_{q}-COOR
dans laquelle p et q sont des nombres entiers dont la valeur varie de 1 à 6, et R¹ et R représentent des radicaux hydrocarbyle comportant de 6 à 24 atomes de carbone.

2. Composition suivant la revendication 1, caractérisée en ce que le composé phénolique du groupe (1) est le bis-(2-hydroxy-3-t-butyl-5-méthylphényle)-méthane.

3. Composition suivant la revendication 1, caractérisée en ce que le composé phénolique du groupe (1) est le bis-(4-hydroxy-3,5-di-t-butylphényle)méthane.

4. Composition suivant la revendication 1, caractérisée en ce que le composé phénolique du groupe (1) est le 1,1,2-tris-(4-hydroxy-3-t-butyl-6-méthyphényle)propane.

5. Composition suivant la revendication 1, caractérisée en ce que le composé phénolique du groupe (3) est le tris-(4-hydroxy-3,5-di-t-butylbenzyle)cyanurate.

6. Composition suivant la revendication 1, caractérisée en ce que le composé phénolique du groupe (2) est le 1,3,5-tris-(4-hydroxy-3,5-di-t-butylbenzyle)-2,4,6-triméthylbenzène.

7. Composition suivant la revendication 1, caractérisée en ce que le composé phénolique du groupe (4) est le diester du N,N'-bis-(2-hydroxyéthyle)oxalamide et l'acide 3-(4-hydroxy-3,5-di-t-butylphényle)propionique.

8. Composition suivant la revendication 1, caractérisée en ce que le composé phénolique de mélange (5a) est un ester d'un acide 3-(3,5-di-sec- ou tert-alkyl-4-hydroxyphényle)propionique et d'un alcool aliphatique monohydroxylé de 15 à 21 atomes de carbone.

9. Composition suivant la revendication 1, caractérisée en ce que le composé phénolique de mélange (5b) est un diester de l'acide 3-(3,5-di-sec- ou t-alkyl-4-hydroxyphényle)propionique et d'un N,N'-dihydroxy-alkyloxalamide, dans lequel le dernier groupe alkyle possède de 2 à 6 atomes de carbone.

10. Composition suivant la revendication 1, caractérisée en ce que le composé phénolique de mélange (5c) est un diester de l'acide 3-(3-alkyl-5-sec- ou t-alkyl-4-hydroxyphényle)propionique et d'un trioxyalkylène-glycol, dont les groupes alkylène possèdent de 2 à 6 atomes de carbone.

11. Composition suivant la revendication 1, caractérisée en ce que le composé phénolique de mélange (5d) est une N,N'-di[3-(3,5-di-sec- ou t-alkyl-4-hydroxyphényl)propanoyl]hydrazine.

12. Composition suivant l'une quelconque des revendications 1 à 11, caractérisée en ce que le composé de mélange (5e) est une diphénylamine.

13. Composition suivant la revendication 12, caractérisée en ce que la diphénylamine est une 4,4'-bis-(benzyl)diphénylamine, dans laquelle les radicaux benzyle et phényle peuvent porter un ou plusieurs radicaux alkyle substituants.

14. Composition suivant la revendication 12, caractérisée en ce que la diphénylamine est une anilinodiphénylamine.

15. Composition suivant l'une quelconque des revendications 1 à 11, caractérisée en ce que le composé de mélange (5e) est un 1,8-diaminonaphtalène, dans lequel l'un des ou les deux atomes d'azote peuvent porter un ou deux radicaux alkyle substituants.

16. Composition suivant l'une quelconque des revendications 1 à 15, caractérisée en ce que le mélange (5) comprend, en outre, 0,2 à 1,0% en poids d'un additif supplémentaire (5g) qui est une pyridine stériquement empêchée.

17. Composition suivant l'une quelconque des revendications 1 à 16, caractérisée en ce que p et q sont égaux à 2 dans le composé de mélange (5f).

18. Composition suivant l'une quelconque des revendications 1 à 17, caractérisée en ce que R¹ et R représentent des radicaux alkyle comportant 12 atomes de carbone dans le composé de mélange (5f).

19. Composition suivant l'une quelconque des revendications 1 à 18, caractérisée en ce que le copolymère est un copolymère d'éthène et de CO.

20. Composition suivant l'une quelconque des revendications 1 à 18, caractérisée en ce que le copolymère est un terpolymère d'éthène, de CO et de propène.

21. Composition suivant la revendication 1, caractérisée en ce qu'elle comprend de 0,05 à 1,5% en poids d'un composé de mélange choisi parmi les composés (5a), (5b), (5c) et (5d) et de 0,05 à 1,5% en poids d'une amine aromatique.

22. Composition suivant la revendication 1, caractérisée en ce qu'elle comprend de 0,05 à 1,0% en poids du composé de mélange (5a) et de 0,1 à 2,0% en poids d'un composé tel que défini dans le groupe (5f).

## Revendications (Revendications pour l'(les) Etat(s) contractant(s) suivant(s): ES)

1. Procédé, caractérisé en ce que l'on ajoute de 0,03 à 3,0% en poids d'un composé phénolique stériquement empêché à un copolymère alternant du monoxyde de carbone et d'un composé à insaturation oléfinique, dans lequel le composé phénolique stériquement empêché est choisi parmi
1) les alcanes bis- et tris-phénoliques,
2) les (alkyl)benzènes tris-phénoliques,
3) les cyanurates tris-phénoliques,
4) les diesters symétriques d'acides monocarboxyliques aliphatiques à substitution hydroxyphénylique et du N,N'-bis(hydroxyalkyle) oxalamide, ou
5) un mélange comprenant,
d'une part,
(5a) un ester alkylique d'un acide carboxylique monovalent portant un substituant du type phénol stériquement empêché terminal, le groupement alkyle de l'ester étant dérivé d'un alcool possédant de 8 à 30 atomes de carbone, et/ou
(5b) un diester tel que défini ci-dessus sous 4), et/ou
(5c) un diester symétrique d'un acide monocarboxylique aliphatique à substitution hydroxyphénylique et d'un di-, tri- ou tétraoxyalkylèneglycol, et/ou
(5d) un N,N'-dialcanoylhydrazide à substitution hydroxyphénylique symétrique et,
d'autre part,
(5e) une amine aromatique, et/ou
(5f) un composé répondant à la formule générale :
R¹OOC-(CH₂)ₚ-S-(CH₂)_{q}-COOR
dans laquelle p et q sont des nombres entiers dont la valeur varie de 1 à 6, et R¹ et R représentent des radicaux hydrocarbyle comportant de 6 à 24 atomes de carbone.

2. Procédé suivant la revendication 1, caractérisé en ce que le composé phénolique du groupe (1) est le bis-(2-hydroxy-3-t-butyl-5-méthylphényle)méthane.

3. Procédé suivant la revendication 1, caractérisé en ce que le composé phénolique du groupe (1) est le bis-(4-hydroxy-3,5-di-t-butylphényle)méthane.

4. Procédé suivant la revendication 1, caractérisé en ce que le composé phénolique du groupe (1) est le 1,1,2-tris-(4-hydroxy-3-t-butyl-6-méthyphényle)-propane.

5. Procédé suivant la revendication 1, caractérisé en ce que le composé phénolique du groupe (3) est le tris-(4-hydroxy-3,5-di-t-butylbenzyle)cyanurate.

6. Procédé suivant la revendication 1, caractérisé en ce que le composé phénolique du groupe (2) est le 1,3,5-tris-(4-hydroxy-3,5-di-t-butylbenzyle)-2,4,6-triméthylbenzène.

7. Procédé suivant la revendication 1, caractérisé en ce que le composé phénolique du groupe (4) est le diester du N,N'-bis-(2-hydroxyéthyle)oxalamide et l'acide 3-(4-hydroxy-3,5-di-t-butylphényle)propionique.

8. Procédé suivant la revendication 1, caractérisé en ce que le composé phénolique de mélange (5a) est un ester d'un acide 3-(3,5-di-sec- ou tert-alkyl-4-hydroxyphényle)propionique et d'un alcool aliphatique monohydroxylé de 15 à 21 atomes de carbone.

9. Procédé suivant la revendication 1, caractérisé en ce que le composé phénolique de mélange (5b) est un diester de l'acide 3-(3,5-di-sec- ou t-alkyl-4-hydroxyphényle)propionique et d'un N,N'-dihydroxy-alkyloxalamide, dans lequel le dernier groupe alkyle possède de 2 à 6 atomes de carbone.

10. Procédé suivant la revendication 1, caractérisé en ce que le composé phénolique de mélange (5c) est un diester de l'acide 3-(3-alkyl-5-sec- ou t-alkyl-4-hydroxyphényle)propionique et d'un trioxyalkylèneglycol, dont les groupes alkylène possèdent de 2 à 6 atomes de carbone.

11. Procédé suivant la revendication 1, caractérisé en ce que le composé phénolique de mélange (5d) est une N,N'-di[3-(3,5-di-sec- ou t-alkyl-4-hydroxyphényl)propanoyl]hydrazine.

12. Procédé suivant l'une quelconque des revendications 1 à 11, caractérisé en ce que le composé de mélange (5e) est une diphénylamine.

13. Procédé suivant la revendication 12, caractérisé en ce que la diphénylamine est une 4,4'-bis-(benzyl)diphénylamine, dans laquelle les radicaux benzyle et phényle peuvent porter un ou plusieurs radicaux alkyle substituants.

14. Procédé suivant la revendication 12, caractérisé en ce que la diphénylamine est une anilinodiphénylamine.

15. Procédé suivant l'une quelconque des revendications 1 à 11, caractérisé en ce que le composé de mélange (5e) est un 1,8-diaminonaphtalène, dans lequel l'un des ou les deux atomes d'azote peuvent porter un ou deux radicaux alkyle substituants.

16. Procédé suivant l'une quelconque des revendications 1 à 15, caractérisé en ce que le mélange (5) comprend, en outre, 0,2 à 1,0% en poids d'un additif supplémentaire (5g) qui est une pyridine stériquement empêchée.

17. Procédé suivant l'une quelconque des revendications 1 à 16, caractérisé en ce que p et q sont égaux à 2 dans le composé de mélange (5f).

18. Procédé suivant l'une quelconque des revendications 1 à 17, caractérisé en ce que R¹ et R représentent des radicaux alkyle comportant 12 atomes de carbone dans le composé de mélange (5f).

19. Procédé suivant l'une quelconque des revendications 1 à 18, caractérisé en ce que le copolymère est un copolymère d'éthène et de CO.

20. Procédé suivant l'une quelconque des revendications 1 à 18, caractérisé en ce que le copolymère est un terpolymère d'éthène, de CO et de propène.

21. Procédé suivant la revendication 1, caractérisé en ce qu'il comprend de 0,05 à 1,5% en poids d'un composé de mélange choisi parmi les composés (5a), (5b), (5c) et (5d) et de 0,05 à 1,5% en poids d'une amine aromatique.

22. Procédé suivant la revendication 1, caractérisé en ce qu'il comprend de 0,05 à 1,0% en poids du composé de mélange (5a) et de 0,1 à 2,0% en poids d'un composé tel que défini dans le groupe (5f).
